# EUROPÄISCHE PATENTANMELDUNG

(11) **EP 2 151 728 A1**
(43) Veröffentlichungstag der Anmeldung: **10.02.2010**
(21) Anmeldenummer: 09164492.2
(22) Anmeldetag: 03.07.2009
(51) Int. Cl.: G05B 23/02

(54) **Verfahren zur Optimierung der Betriebsweise einer Vorrichtung zum Verpacken von Materialbahnrollen und Vorrichtung zur Verpackung von Materialbahnrollen**

(30) Priorität: 05.08.2008 DE 102008041010
(71) Anmelder: Voith Patent GmbH, 89522 Heidenheim (DE)
(72) Erfinder: Nelles, Josef, 52224 Stolberg (DE); Lücke, Thomas, 41366 Schwalmtal (DE); Marquardt, Sven, 47918 Tönisvorst (DE)

(57) **Zusammenfassung**

Die Erfindung betrifft ein Verfahren zur Optimierung der Betriebsweise einer Vorrichtung (1) zum Verpacken von Materialbahnrollen (2.1-2.n), bei welchem in einem Überwachungsbereich (B) der Vorrichtung (1) deren Funktionsweise überwacht wird und eine Abweichung (Δx1 - Δxn, Δxvn) von einem Idealzustand (Z_{I}) in der Funktionsweise detektiert wird. Die Erfindung ist **dadurch gekennzeichnet, dass** die Abweichung (Δx1 - Δxn, Δxvn) klassiert (K1-Kn) und hinsichtlich ihrer Auswirkung auf die Funktionsweise der Vorrichtung (1) zum Verpacken von Materialbahnrollen (2.1-2.n) analysiert wird und in Abhängigkeit der Auswirkung auf die Funktionsweise der Vorrichtung (1) zum Verpacken von Materialbahnrollen (2.1-2.n) zumindest ein Signal (YA, YE, YI, YS, YW, YZ) erzeugt wird. Die Erfindung betrifft ferner eine Vorrichtung zum Verpacken von Materialbahnrollen (2.1 bis 2.n).

## Beschreibung

Die Erfindung betrifft ein Verfahren zur Optimierung der Betriebsweise einer Vorrichtung zum Verpacken von Materialbahnrollen, bei welchem in einem Überwachungsbereich der Vorrichtung deren Funktionsweise überwacht wird und eine Abweichung von einem Idealzustand in der Funktionsweise detektiert wird.

Die Erfindung betrifft ferner eine Vorrichtung zum Verpacken von Materialbahnrollen, insbesondere eine Packanlage zur Umhüllung von Materialbahnrollen mit Verpackungsmaterial, umfassend zumindest eine Umhüllungsstation und eine Einrichtung zur Anlage/Fixierung von Stirndeckeln.

Vorrichtungen zur Verpackung von Materialbahnrollen sind in unterschiedlichen Ausführungen aus dem Stand der Technik bekannt. Diese variieren je nach Art des gewählten Verpackungsverfahrens in der Ausgestaltung und Funktionsweise der Umhüllungsstationen sowie der Einrichtungen zur Anlage von Stirndeckeln, die im Bereich der Umhüllungsstation als aktive Handlingeinrichtungen ausgebildet sein können oder aber der Umhüllungsstation vorgeordnet als Einrichtungen, die die Stirndeckel lediglich an die Stirnseiten der Materialbahnrollen anlegen, wobei die Stirndeckel gemeinsam mit der Materialbahnrolle im angelegten Zustand weiter bis in den Bereich der Umhüllungsstation transportiert werden. Derartige Vorrichtungen können kontinuierlich oder diskontinuierlich betrieben werden, wobei insbesondere bei kontinuierlicher Betriebsweise Störungen in der Funktionsweise zu einer verschlechterten Ausnutzung und verlängerten Verpackungszeiten führen können. Dabei werden derartige Anlagen häufig derart betrieben, dass bei Auftreten einer Störung innerhalb der gesamten Anlage über eine Steuerung der Automatikbetrieb der Anlage gestoppt wird. In vielen Fällen erfolgt die Unterbrechung dabei eher prophylaktisch, da die Art und der Umfang der Störung gar nicht bekannt sind. Das Bedienpersonal wird über ein entsprechendes Warn- oder Informationssignal informiert. Die Aufgabe des Bedienpersonals besteht nunmehr darin, anhand der Meldung die Störung innerhalb der Anlage zu beseitigen, wobei im Regelfall das Bedienpersonal zur Anlage eilen und die Störquelle suchen muss. Im Anschluss daran kann der Automatikbetrieb wieder eingeschaltet werden. Ein wesentlicher Nachteil einer derartigen Ausführung besteht dabei darin, dass zumindest eine Person ständig zur Überwachung einer Packanlage im Bereich dieser verbleiben muss, um gegebenenfalls bei Auftreten einer Störung und einer Fehlermeldung reagieren zu können oder aber die Stillstandszeiten der Packanlage werden verlängert, da Bedienpersonal, das sich eventuell an einer anderen Anlage aufhält, die Störung erst verspätet mitbekommt. Dies kann im ungünstigsten Fall zu einem Produktionsstau führen. Die Auslastung der Packanlage selbst wird dadurch erheblich reduziert.

Der Erfindung liegt daher die Aufgabe zugrunde, ein Verfahren zur Optimierung der Betriebsweise der Packanlage derart weiterzuentwickeln, dass die genannten Nachteile vermieden werden. Insbesondere sollen der Produktionsausstoß und die Produktivität erhöht werden und ungeplante Stillstände sowie lange Stillstandszeiten weitestgehend vermieden werden.

Erfindungsgemäß wird die Aufgabe durch die Merkmale der Ansprüche 1 und 12 charakterisiert. Vorteilhafte Ausgestaltungen sind in den Unteransprüchen beschrieben.

Ein erfindungsgemäßes Verfahren zur Optimierung der Betriebsweise einer Vorrichtung zum Verpacken von Materialbahnrollen, bei welchem in einem Überwachungsbereich der Vorrichtung deren Funktionsweise überwacht wird und eine Abweichung von einem Idealzustand in der Funktionsweise detektiert wird, ist dadurch charakterisiert, dass die Abweichung klassiert und hinsichtlich ihrer Auswirkung auf die Funktionsweise der Vorrichtung zum Verpacken von Materialbahnrollen analysiert wird und in Abhängigkeit der Auswirkung auf die Funktionsweise der Vorrichtung zum Verpacken von Materialbahnrollen zumindest ein Signal erzeugt wird.

Unter Idealzustand der Funktionsweise wird dabei der Zustand verstanden, der einen reibungslosen Ablauf der Verpackung von Materialbahnrollen, insbesondere in einer gewünschten Produktionsgeschwindigkeit zulässt. Der Idealzustand ist dabei durch die Betriebsparameter der Vorrichtung zum Verpacken von Materialbahnrollen, insbesondere der einzelnen an der Verpackung beteiligten Komponenten charakterisiert, wobei die den Idealzustand beschreibenden Parameter durch einen bestimmten Istwert charakterisiert sind, der in einem Toleranzbereich liegen kann.

Die Klassierung von Abweichungen beinhaltet eine Zuordnung der einzelnen Abweichungen in Klassen, das heißt, je nach Art der konkreten Abweichung und bezogen auf einen Parameter wird eine separate Klasse gebildet, so dass die Abweichungen für einen bestimmten einzelnen Parameter jeweils der gleichen Klasse zugeordnet sind.

Die erfindungsgemäße Lösung ermöglicht eine abgestufte Reaktion auf Störungen im Betrieb der Vorrichtung zur Verpackung von Materialbahnrollen, die als Abweichungen vom Idealzustand auftreten. Dadurch kann der Anteil an Stillstandszeiten insgesamt minimiert werden und die Produktivität der Anlage erhöht werden.

Gemäß einer besonders vorteilhaften Ausführung wird für jede Klasse der Abweichungen zumindest ein Zulässigkeitsbereich definiert, wobei der Zulässigkeitsbereich quasi den Toleranzbereich für die den Idealzustand beschreibende Größe des Parameters darstellt. Dadurch können Abweichungen, die als im Toleranzbereich liegend detektiert werden, von einer Reaktion/Aktion ausgenommen werden.

Bezüglich des auszugebenden Signals bestehen eine Vielzahl von Möglichkeiten. Dies hängt im Wesentlichen auch von der Art der erforderlichen Reaktion auf die detektierte Abweichung ab. Als Signale werden dabei vorzugsweise Warnsignale, Ereignissignale, Wartungssignale oder Zustandssignale ausgegeben. Bei den Zustandssignalen gemäß der Erfindung handelt es sich um Signale, die den aktuellen Ist-Zustand einer Komponente oder der gesamten Anlage im Überwachungsbereich beschreiben. Diese können beispielsweise Istwerte von Prozessparametern, Eigenschaftskennwerte beinhalten. Als Wartungssignale werden Signale verstanden, die aufgrund eines momentanen Zustandes/Prozesses auf eine momentan noch nicht erforderliche, jedoch in absehbarer Zeitdauer in der Zukunft liegende Reaktion hinweisen. Ereignissignale sind Signale, die sofort ein Ereignis einleiten. Warnsignale sind Signale, die auf eine Störung hinweisen.

Dabei wird in einer besonders vorteilhaften Ausführung bei Abweichungen, die außerhalb des Zulässigkeitsbereiches liegen, zumindest ein Warnsignal erzeugt. Dieses Warnsignal wird dabei derart gesetzt, dass dieses nach Möglichkeit auch vom Bediener erfassbar beziehungsweise erkennbar ist.

Gemäß einer besonders vorteilhaften Weiterentwicklung wird bei Abweichungen außerhalb des Zulässigkeitsbereiches ein automatisiertes Stellsignal zur Unterbrechung der Funktionsweise der Vorrichtung zur Verpackung von Materialbahnrollen eingeleitet, d.h. die Anlage angehalten.

Der Zulässigkeitsbereich ist derart gewählt, dass bereits hier eine Vorselektion der erfassten Abweichungen im Hinblick auf ihre Auswirkungen vorgenommen wird und nur bei eindeutigen gravierende Abweichungen vom Idealzustand, die eventuell neben der Produktion von Ausschuss noch eine Beschädigung einzelner Komponenten zur Folge haben können, eine Unterbrechung der Betriebsweise der Vorrichtung zur Verpackung eingeleitet wird. Der Zulässigkeitsbereich muss dabei nicht starr vorgegeben werden. Dieser kann auch während der Betriebsweise adaptiv an die einzelnen auftretenden Abweichungen angepasst werden.

Um sehr detailliert auf die einzelnen Störungen eingehen zu können, ist erfindungsgemäß der Zulässigkeitsbereich einer Klasse von Abweichungen in Unterzulässigkeitsbereiche unterteilt, wobei jeder Bereich durch die Auslösung eines separaten unabhängig von den anderen Bereichen möglichen Signals charakterisiert ist. Dadurch ist es noch einmal möglich, sehr abgestuft und detailliert und zum Teil auch sehr genau im Hinblick auf die auftretende Störung auf diese einzugehen. Ferner kann zum einen ein Bedienereingriff, der sonst manuell erfolgt, in automatisierter Weise schnell nachgestellt werden, so dass das Bedienpersonal zur Behebung eines Teils von Störungen nicht mehr erforderlich ist. Zum anderen können Aktionen auch aufeinander abgestimmt werden, so dass beispielsweise ein Betreten des Überwachungsbereiches erst dann erfolgt, wenn dies tatsächlich erforderlich ist und in diesem Fall auch gleich weitere Aktionen mit vorgenommen werden, die als Wartungssignale bereits angezeigt waren. Auch für die Unterzulässigkeitsbereiche gilt, dass diese nicht starr vorgegeben sein müssen. Auch diese können über einen längeren Betriebszeitraum adaptiv in Abhängigkeit der aufgetretenen Störungen angepasst werden.

Die Abweichung bezieht sich immer auf einen Referenzwert oder Referenzbereich einer physikalischen oder anderen Größe, insbesondere in der Regel einen Parameter der Betriebsweise einer Komponente/Aggregat/der Vorrichtung oder einen Parameter der Materialbahnrollen, der Verpackung etc. Als Abweichung kann dabei ein Zustand oder ein Ereignis angesehen werden. Als Ereignisse können unter anderem angesehen werden:
- eine Änderung eines Betriebsparameters einer Komponente der Packanlage;
- eine Änderung von Verbrauchsmaterial in den Bereitstellungsbereichen der Packanlage;
- Bewegung von Objekten/Personen im Packbereich.

Als Zustandsgrößen können die, die Lage, Dimensionierung und/oder Menge an Verbrauchsmaterial beschreibende Größen, ferner das Vorhandensein oder Nichtvorhandensein von Verbrauchsmaterialien, Stellgrößen zur Betätigung der einzelnen Komponenten/Aggregate der Packanlage, Istwerte der Prozessgrößen der einzelnen Komponenten/Aggregate der Packanlage angesehen werden.

Bezüglich der Art der Erzeugung der Signale bestehen eine Vielzahl von Möglichkeiten. Mittels diesen können in vorteilhafter Weise sehr große räumliche Distanzen überwunden werden, so dass das Bedienpersonal gleichzeitig mehrere Anlagen betreuen kann und trotzdem zeitnah bei auftretenden Störungen an den einzelnen Anlagen tätig werden kann. In diesem Fall werden vorzugsweise akustische Signale in Kombination mit optischen Signalen, beispielsweise ein Versenden einer SMS an das Bedienpersonal gewählt.

Vorrichtungsmäßig umfasst die Vorrichtung zum Verpacken von Materialbahnrollen zumindest eine Umhüllungsstation und eine Einrichtung zur Anlage/Fixierung von Stirndeckeln. Erfindungsgemäß ist ferner ein intelligentes Fehleranalyse- und Meldesystem vorgesehen, umfassend ein der Vorrichtung zugeordnetes Überwachungssystem zur Erfassung von Abweichungen von einem Idealzustand in der Funktionsweise der Vorrichtung, eine Auswert- und/oder Analysevorrichtung zur Auswertung der mit dem Überwachungssystem detektierten Abweichungen und zumindest eine Einrichtung zur Erzeugung zumindest einer Stellgröße zur Ausgabe wenigstens eines Signals, insbesondere Ansteuerung einer Stelleinrichtung eines Meldesystems und/oder einer Komponente/Aggregat/der Vorrichtung.

Das Überwachungssystem umfasst dazu zumindest eine der nachfolgenden Einrichtungen:
- Einrichtungen zur Erfassung von Prozessgrößen/Prozessparametern der einzelnen Komponenten/Aggregate/Maschinen/Anlage;
- Einrichtungen zur Erfassung von Zustandsgrößen /Zustandsparametern der einzelnen Komponenten/Aggregate /Maschinen /Anlage;
- Einrichtungen zur Erfassung von Prozessgrößen/Prozessparametern der einzelnen Materialbahnrollen/Verbrauchsmaterialien,
- Einrichtungen zur Erfassung von Zustandsgrößen/ Zustandsparametern der Materialbahnrollen/Verbrauchsmaterialien.

Gemäß einer besonders vorteilhaften Ausführung umfasst das intelligente Fehleranalyse- und Meldesystem ein Meldesystem zur Anzeige/Information des Bedienpersonals. Dieses kann als optisches Meldesystem, akustisches Meldesystem oder beispielsweise eine Kombination aus beiden ausgebildet werden.

Die Datenübertragung zwischen den einzelnen Komponenten des intelligenten Fehleranalyse- und/oder Meldesystems erfolgt entweder über Leitungsverbindungen, analog oder seriell oder drahtlos per Funk oder Infrarot.

Die erfindungsgemäße Lösung wird nachfolgend anhand von Figuren erläutert. Darin ist im Einzelnen Folgendes dargestellt:
- Figur 1a: zeigt den Grundaufbau einer Vorrichtung zur Verpackung von Materialbahnrollen;
- Figur 1b: verdeutlicht anhand eines Signalflussbildes den Grundablauf eines erfindungsgemäßen Verfahrens;
- Figur 2: verdeutlicht eine Weiterentwicklung gemäß Figur 1 mit zusätzlicher Überwachung der Häufigkeit des Auftretens einer Abweichung über die Zeit;
- Figuren 3a bis 3c: zeigen Ausführungen eines intelligenten Fehleranalyse-und Meldesystems;
- Figur 4: verdeutlicht ein konkretes Beispiel für eine Abweichungsklasse, das zum Handling der Stirndeckel erforderliche Vakuum an der Einrichtung zur Positionierung und/oder Fixierung beinhaltend;
- Figur 5: verdeutlicht schematisiert vereinfachter Darstellung den Aufbau eines intelligenten Fehleranalyse- und Meldungssystems;
- Figuren 6a und 6b: verdeutlichen in schematisiert vereinfachter Darstellung Ausführungen unterschiedlicher Meldesysteme.

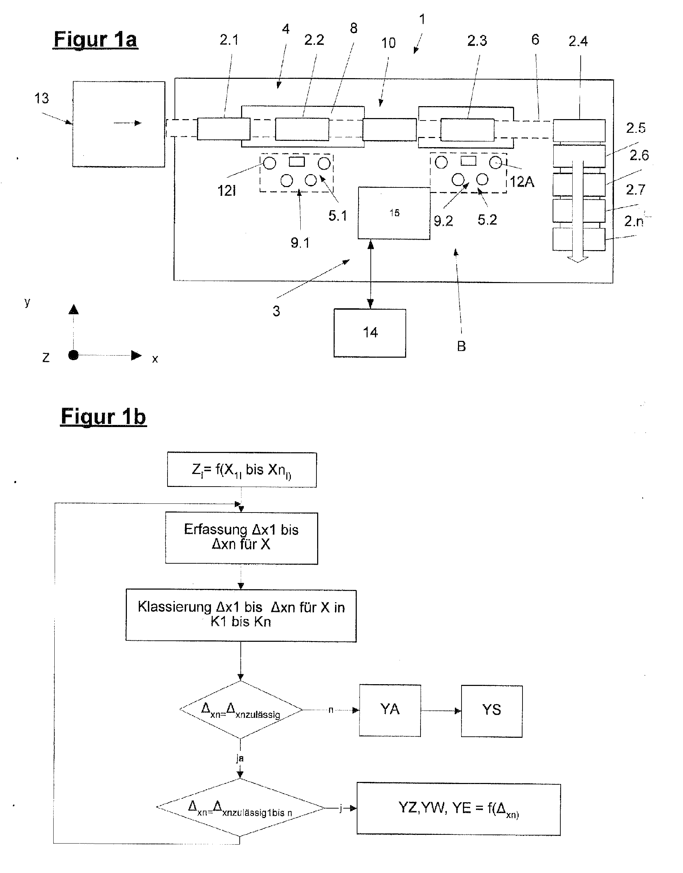

Die Figur 1b verdeutlicht anhand eines Signalflussbildes den Grundablauf eines erfindungsgemäßen Verfahrens zur Optimierung der Betriebsweise einer in Figur 1a in schematisiert vereinfachter Darstellung wiedergegebenen Vorrichtung 1 zum Verpacken von Materialbahnrollen 2.1 bis 2.n. Bei diesem wird nach der Inbetriebnahme der Vorrichtung 1 zum Verpacken von Materialbahnrollen 2 eine Überwachung eingeleitet, wobei die Überwachung sich auf einen vordefinierten Überwachungsbereich B erstreckt. Der Überwachungsbereich B entspricht dabei zumindest einem Teilbereich der räumlichen Erstreckung der Vorrichtung 1 zur Verpackung von Materialbahnrollen 2. Der Überwachungsbereich B kann hinsichtlich seiner Größe und in Abhängigkeit der gewählten Art, Dimensionierung, Funktionsweise sowie Anordnung eines Überwachungssystems 15 beliebig gewählt werden, denkbar ist auch eine Ausbildung des Überwachungsbereiches B über die gesamte räumliche Erstreckung der Vorrichtung 1 zur Verpackung von Materialbahnrollen 2.1 bis 2.n. Die Vorrichtung 1 umfasst zumindest eine Umhüllungsstation 4, in welcher die einzelnen Materialbahnrollen 2.1 bis 2.n mit Verpackungsmaterial in der gewünschten Art und Weise umhüllt werden sowie ferner zur Abdeckung jeweils der beiden Stirnseiten einer Materialbahnrolle 2.n und zur Fixierung der Verpackung beziehungsweise Umhüllung der einzelnen Materialbahnrollen 2.1 bis 2.n an den Stirnseiten der Materialbahnrollen 2.1 bis 2.n Einrichtungen 5 zur Positionierung und/oder Lagefixierung von Stirndeckeln 12. Vorzugsweise finden jedoch immer zwei derartige Einrichtungen 5.1 und 5.2 Verwendung, insbesondere um eine Stirndeckeleinheit aus einem Außen- und einem Innenstirndeckel 12A und 12I erzeugen zu können. Bei diesen kann es sich um Manipulatoreinrichtungen in Form von Industrierobotern handeln. Die Einrichtung 5.2 kann auch von einer Packpresse gebildet werden. Die Vorrichtung 1 umfasst in der Regel ferner Transporteinrichtungen 6 zum Transport der einzelnen Materialbahnrollen 2.1 bis 2.n zur jeweiligen Umhüllungsstation 4 und/oder von dieser weg. Die Vorrichtung 1 beschreibt einen so genannten Packanlagenbereich 7. Dieser entspricht der räumlichen Ausdehnung der Vorrichtung 1, wobei der Packanlagenbereich 7 auch die Transporteinrichtungen 6 mit umfasst. Im Packanlagenbereich 7 sind für die einzelnen Verpackungsmaterialien Bereitstellungsbereiche, hier beispielsweise 8 für die Verpackungsmaterialbahnrollen in der Verpackungsmaterialspendereinheit der Umhüllungsstation 4 und 9.1, 9.2 für die Stirndeckel 12I, 12A, welche mit den Einrichtungen 5.1, 5.2 positioniert und hinsichtlich ihrer Lage an den Stirnseiten der Materialbahnrollen 2.1 bis 2.n fixiert werden, vorgesehen. Die Vorrichtung 1 ist dabei einer Produktionsanlage 13, beispielsweise in Form einer Rollenschneidmaschine oder Maschine zur Herstellung von Materialbahnen, insbesondere Faserstoffbahnen nachgeordnet.

Das Überwachungssystem 15 umfasst zumindest eine Einrichtung, vorzugsweise eine Mehrzahl von Einrichtungen zur Überwachung des Überwachungsbereiches B auf auftretende Abweichungen. Die einzelne Einrichtung ist derart ausgeführt und ausgebildet, dass diese geeignet ist, von der idealen Funktionsweise, insbesondere den diese beschreibenden Größen abweichende Zustände oder Ereignisse in der Vorrichtung 1 zu erfassen. Dazu können optische, mechanische, elektrische oder andere Erfassungssysteme Verwendung finden. Diese können im einfachsten Fall in Form von Sensoren vorliegen. Denkbar sind jedoch auch komplexere Systeme mit Bilderfassung und Auswertung beziehungsweise Istwerterfassungseinrichtungen mit Sollwertvergleichseinrichtungen, woraus die Abweichung ableitbar ist. Ferner ist eine Auswert- und/oder Analysevorrichtung 14 beziehungsweise ein Auswert- und/oder Analysesystem 14 vorgesehen, mittels welcher die vom Überwachungssystem 15, insbesondere den Einrichtungen zur Überwachung erfassten Daten verarbeitet werden. In Abhängigkeit des Auswertergebnisses beziehungsweise der Analyse innerhalb der Auswert- und/oder Analysevorrichtung 14 können Stelleinrichtungen zur Realisierung unterschiedlicher Anforderungen angesteuert werden. Dabei werden Stellgrößen zur Erzeugung von Warnsignalen, Wartungssignalen, Zustandssignalen, Ereignissignalen erzeugt. Das Überwachungssystem 15 und die Auswert- und/oder Analysevorrichtung 14 bilden ein intelligentes Fehleranalyse- und Meldesystem 3, mittels welchem die Anzahl der Produktionsunterbrechungen minimiert werden kann.

Im Überwachungsbereich B erfolgt eine Überwachung der Funktionsweise der Vorrichtung 1 beziehungsweise des jeweiligen Teilbereiches der Vorrichtung 1, der sich im Überwachungsbereich B befindet. Für die Funktionsweise wird vorzugsweise ein Idealzustand Z_{I} definiert, der die Grundlage bei der Beurteilung im Hinblick auf eine ungestörte Betriebsweise der Vorrichtung 1 bildet. Der Idealzustand der Funktionsweise ist dabei durch den reibungslosen Ablauf der einzelnen erforderlichen Verfahrensschritte zur Verpackung von Materialbahnrollen 2.1 bis 2.n charakterisiert. Dieser Idealzustand Z_{I} kann durch
- die Zustandsgrößen/die Prozessparameter von einzelnen Komponenten/Aggregate/Maschinen der Vorrichtung 1 während des Verfahrens wenigstens mittelbar charakterisierende Größen und/oder
- die Zustandsgrößen/die Prozessparameter des Verbrauchsmaterials, insbesondere der Verpackungsbahnrollen und/oder Stirndeckel während des Verfahrens wenigstens mittelbar charakterisierende Größen und/oder
- Ereignisse während der Betriebsweise wenigstens mittelbar charakterisierende Größen
charakterisiert werden.

Als den Zustand charakterisierende Größen können dabei beispielhaft nachfolgende Größen angesehen werden:
- die noch vorrätige Menge an Verbrauchsmaterial wenigstens mittelbar charakterisierenden Größen;
- die Qualität, insbesondere Art, Zusammensetzung, Dimensionierung der Verbrauchsmaterialien wenigstens mittelbar charakterisierenden Größen;
- aktuelle Istgrößen der Prozessparameter der einzelnen Komponenten/Aggregate/Maschinen der Vorrichtung 1, beispielsweise die den Betrieb der Vorrichtung wenigstens mittelbar charakterisierenden Größen, insbesondere Transportgeschwindigkeit für die Materialbahnrollen, Betriebsparameter einer Umhüllungsstation, Betriebsparameter einer Einrichtung zur Anlage und/oder Fixierung von Stirndeckeln;
- das Vorhandensein, insbesondere Lage eines an der Stirnseite der Materialbahnrolle 2 angeordneten Stirndeckels vor dem Umschlagen eines Verpackungsmaterialbahnüberstandes.

Die einen Zustand charakterisierenden Größen werden dabei zu einem konkreten Zeitpunkt erfasst. Die Erfassung kann fortlaufend oder aber in Intervallen erfolgen. Bezüglich der den Idealzustand Z_{I} charakterisierenden Ereignisse kann beispielhaft die Bewegung eines Stirndeckels 12I oder 12A in zeitlicher Abfolge vom jeweiligen Stirndeckelstapel bis zur Anlage an der Materialbahnrolle 2.n angesehen werden. Andere Möglichkeiten sind denkbar. Wird nunmehr bei der Überwachung im Überwachungsbereich B eine Abweichung Δ in irgendeiner Form vom vordefinierten Idealzustand Z_{I} detektiert, wird erfindungsgemäß nicht sofort die Anlage angehalten, sondern eine Auswertung hinsichtlich der Abweichung der erfassten Abweichung gegenüber dem Idealzustand vorgenommen. Dazu werden die erfassten Abweichungen Δ in entsprechende, die Art der Abweichung Δ charakterisierende Klassen Kx mit x= 1 bis n und damit Klassen K1 bis Kn klassiert und innerhalb dieser einzelnen Klassen K1 bis Kn eine Auswertung vorgenommen. Vorzugsweise wird für jede Prozessgröße/Zustandsgröße X eine eigene Klasse K gebildet. Als Arten von Abweichungen können beispielsweise angesehen werden:
- Bewegung von Stirndeckeln außerhalb der Bewegung entsprechend dem Idealzustand im Bereich der Umhüllungsstation;
- Bewegung von Stirndeckeln außerhalb der geforderten Bewegung entsprechend dem Idealzustand im Bereich der Packanlage;
- Beschädigungen am Verbrauchs material, insbesondere Verpackungsmaterial und/oder Stirndeckel vor und/oder nach der Anlage an der Materialbahnrolle;
- Stirndeckelvorrat im Bereitstellungsbereich.

Bei den einer Klasse K1 bis Kn, zugeordneten Abweichungen handelt es sich um Abweichungen Δx1 bis Δxn der Istwerte von einer, einen Idealzustand Z_{I} beschreibenden Größe X_{1I} bis X_{nI}. Dabei werden in Abhängigkeit der Art der erfassten Abweichung vom Idealzustand Z_{I} innerhalb der Klassen K1 bis Kn Zulässigkeitsbereiche Δx1_{zulässig} beziehungsweise Δxn_{zulässig} definiert, wobei bei Vorliegen einer Abweichung Δx1 beziehungsweise Δxn außerhalb des jeweiligen Zulässigkeitsbereiches Δx1_{zulässig} beziehungsweise Δxn_{zulässig} automatisch eine schwerwiegende Störung in der Funktionsweise der Vorrichtung 1 detektiert wird, die zur Erzeugung eines Warnsignals YA und/oder vorzugsweise eines Stellsignals YS zum Anhalten der Vorrichtung 1 führt. Liegt die Abweichung Δx1 beziehungsweise Δxn innerhalb des Zulässigkeitsbereiches Δx1_{zulässig} beziehungsweise Δxn_{zulässig}, kann eine Entscheidung getroffen werden, inwieweit diese für die Funktionsweise der Vorrichtung 1 relevant ist. Dabei wird insbesondere auf eine erst in einer bestimmten Zeitdauer mögliche Beeinträchtigung der Funktionsweise abgestellt. In Abhängigkeit davon, insbesondere je nach Vorliegen in einem der Unterzulässigkeitsbereiche Δx_{1zulässig1}, Δx1_{zulässign}, Δxn_{zulässig1} beziehungsweise Δxn_{zulässign} werden Zustands-, Wartungs- und Ereignissignale YZ, YW, YE ausgegeben. So kann beispielsweise im Bereich Δ_{X1zulässig1} ein Wartungssignal erzeugt werden, welches das Bedienpersonal auf eine in naher Zukunft beziehungsweise zeitlich absehbar bevorstehende erforderliche Aktion hinweist. Δ_{X1zulässign} steht für Abweichungen, die den Betrieb nicht beeinträchtigen, jedoch beispielsweise das Bedienpersonal zu einer in Zukunft erforderlichen Aktion aufrufen. Somit erfolgt eine Unterrichtung des Bedienpersonals sozusagen in vorausschauender Weise. Durch die rechtzeitige Information des Bedienpersonals oder aber durch Einleiten automatisierter Vorgänge, wie Nachrüstvorgänge für Verpackungsmaterial, kann eine sich bei Abbau des Vorrats an Verpackungsmaterial erforderliche Nachrüstung innerhalb der Vorrichtung 1 in den unterschiedlichen Bereitstellungsbereichen 8, 9.1, 9.2 aufeinander abgestimmt vorgenommen werden und somit die Anzahl der für Rüstvorgänge erforderlichen Stillstände minimiert werden.

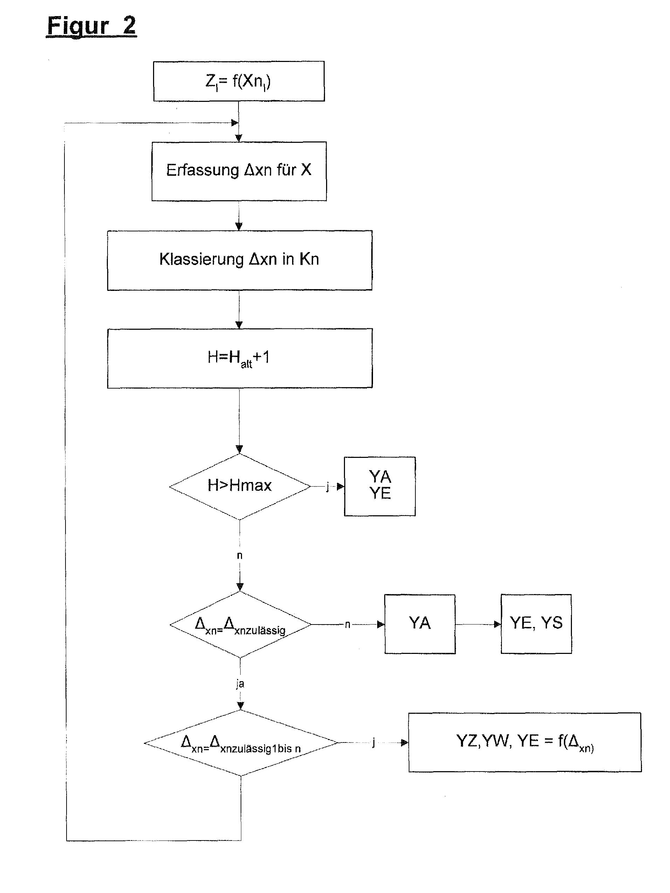

Gemäß einer besonders vorteilhaften Ausführung wird jedoch auch die Häufigkeit H der Ermittlung von Abweichungen im Überwachungsbereich B überwacht und in die Auswertung und Analyse einbezogen. Dabei kann in Abhängigkeit der Häufigkeit H über eine vordefinierte Zeitdauer auf einen Primärfehler geschlossen werden, der wiederum eine weitere Aktion auslöst. Eine derartige Vorgehensweise wird in der Figur 2 an einem Beispiel anhand eines Signalflussbildes verdeutlicht. Hierbei wird eine Abweichung Δx vom Idealzustand Z_{I} in Form einer nicht ordnungsgemäßen Umfaltung überstehender Faltränder detektiert, die je nach Schweregrad zu einem Warnsignal, einem Zustands- oder Ereignissignal führt. Ist die Faltung derart, dass keine ordnungsgemäße Anlage der Stirndeckel mehr erfolgen kann beziehungsweise dass Verpackungsmaterial beschädigt ist, führt dies zu einer Ausgabe eines Ereignissignals YE, das zum Aussondern der derart umhüllten Materialbahnrolle führt und zur Zuführung zu einem erneuten Verpackungsvorgang. Ferner kann auch die Anlage angehalten werden, je nach Ausführung der Vorrichtung 1. Wird nunmehr innerhalb einer vordefinierten Zeitdauer, beispielsweise innerhalb einer bestimmten Verpackungstaktanzahl, wobei ein Takt durch die Umhüllung einer einzelnen Materialbahnrolle 2.n charakterisiert ist, dieser Fehler Δx mehrmals detektiert beziehungsweise mit einer Häufigkeit H > Hmax oder in einem bestimmten Prozentbereich bezogen auf die gesamte Betriebszeitdauer T, kann hier auf eine weitere Abweichung Δxn+1 geschlossen werden, nämlich eine Abweichung in der Qualität des Verpackungsmaterials vom Idealzustand. Ist dieses beispielsweise durch eine zu hohe Trockenheit und zu geringe Feuchte charakterisiert, treten diese Fehler häufiger auf. Das Verpackungsmaterial ist dann durch entsprechend an die Umgebungsbedingungen in der Umhüllungsstation konditionierte Verpackungsmaterialbahnen zu ersetzen oder es ist eine Fehlerhäufigkeit bis zur Einstellung dieses Konditionierzustandes oder dem vollständigen Abrollen der Verpackungsmaterialbahnrolle einzukalkulieren. Vorzugsweise wird hier dann ein Ereignissignal YE ausgelöst, welches bewirken soll, dass die Verpackungsmaterialbahnrolle ausgetauscht wird. Die Häufigkeit kann im einfachsten Fall durch Setzen eines Zählers erfasst werden. Der Häufigkeitswert wird auf Hₐₗₜ gesetzt und der neue Wert H ergibt sich aus Hₐₗₜ+1.

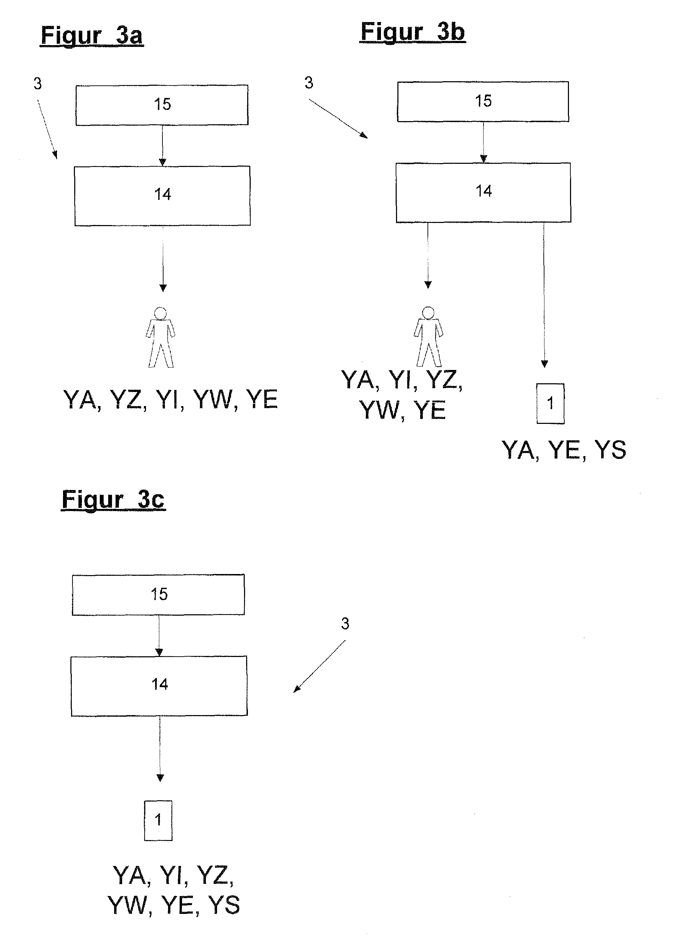

Die in der Figur 2 dargestellte Ausführung ist ein Beispiel. Dieses kann auch auf andere Fehler in analoger Weise angewandt werden, wobei jedoch die dann daraus resultierenden Signale unterschiedlicher Art sein können. Diese können mitunter in einem Warnsignal YA, einem Stellsignal YS zur Ansteuerung der Vorrichtung, einem Wartungssignal YW oder aber einem Zustandssignal YZ resultieren. Die einzelnen Signale können dabei entweder einen automatisierten Vorgang auslösen und/oder aber eine Information an das Bedienpersonal weitergeben, welche anhand des Signals eine Aktion ableitet oder aber bereits durch das Signal auf eine folgende Situation hingewiesen wird. Dies hängt im konkreten Fall von der Fehleranalyse- und Auswertung innerhalb der Auswert- und Analysevorrichtung 14, die zugrunde gelegt wird, sowie der Wichtung der einzelnen Abweichungen innerhalb einer Abweichungsklasse und der daraus resultierenden Notwendigkeiten. Je eingehender und detaillierter die einzelnen Bereiche in Zulässigkeitsbereiche untergliedert werden, wobei diese Zulässigkeitsbereiche wieder in Unterbereiche unterteilbar sind, und je konkreter die aus den einzelnen Unterbereichen ableitbaren Aktionen vorgebbar sind, um so einfacher kann eine vollständig automatisierte Reaktion auf detektierte Abweichungen erfolgen. Dabei wird in der Regel davon ausgegangen, dass die sich aus der Analyse ergebenden Notwendigkeiten zumindest in einer Information an das Bedienpersonal resultieren müssen, das die erforderlichen Aktionen einleitet. Dies wäre gemäß Figur 3a die erste Stufe der intelligenten Fehleranalyse und Auswertung, in welcher vom Überwachungssystem erfasste Abweichungen in der Auswertung zu Signalen führen, die eine Reaktion von Seiten des Bedienpersonals allein erfordern. Die Signale werden als Warnsignale YA, Zustandssignale YZ über den aktuellen Zustand von die Betriebsweise charakterisierenden Prozess-/Zustandsgrößen, Wartungssignale YW zum Hinweis auf zu einem zukünftigen Zeitpunkt erforderliche Handlungen, Ereignissignale YE zum Aufruf einer Aktion ausgegeben. Gemäß Figur 3b findet eine teilweise automatisierte Einleitung von Aktionen in Abhängigkeit der ermittelten Erfordernisse aus den detektierten Abweichungen statt, ferner eine Information des Bedienpersonals, wobei diese Information parallel zur automatisierten Einleitung von Aktionen erfolgen kann, jedoch auch teilweise zusätzliche Aktionen erfordert, die über das Bedienpersonal allein einleitbar sind und nicht automatisiert eingeleitet werden können. Dazu werden Ereignissignale, Wartungssignale, Warnsignale, Zustandssignale in Stellsignale in der Vorrichtung 1 umgesetzt. Parallel erfolgt zumindest eine Information des Bedienpersonals in Form eines Informationssignals, welches auch aus den anderen Signalarten gebildet werden kann. Gemäß Figur 3c kann eine vollautomatische Reaktion stattfinden. Gemäß einer besonders vorteilhaften Ausführung wird jedoch immer eine Ausführung gemäß Figur 3b gewählt, wobei vorzugsweise das Bedienpersonal parallel auch über die automatisch eingeleiteten Aktionen informiert wird.

In einer vorteilhaften Weiterentwicklung kann die Analyse und Auswertung adaptiv ausgestaltet werden, das heißt, es kann beispielsweise bei Auftreten zusätzlicher im System nicht berücksichtigter detektierter Abweichungen das Fehleranalyse-und Auswertsystem noch an diese angepasst werden.

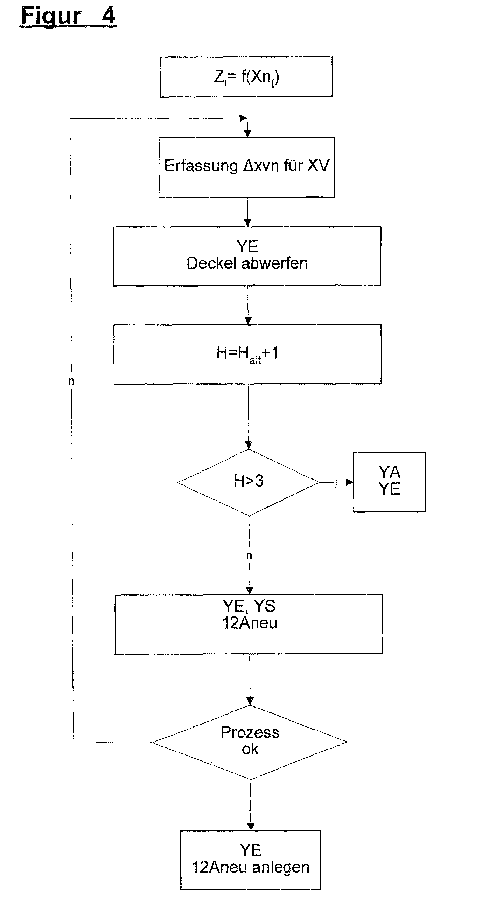

Die Figur 4 verdeutlicht in schematisiert vereinfachter Darstellung anhand eines Signalflussbildes beispielhaft das erfindungsgemäße Verfahren für den Ablauf beim Anlegen eines so genannten Außenstirndeckels 12A an die Stirnseite einer Materialbahnrolle 2.n. Die Positionierung und/oder Lagefixierung erfolgt mittels einer Einrichtung 5.1, insbesondere Handlingeinrichtung in Form eines Industrieroboters. Wird hier eine Abweichung beim Anlegen des erforderlichen Vakuums beim Handling des Außenstirndeckels 12A als Größe XV detektiert, die als Δxvn bezeichnet wird, wird ein Ereignissignal YE ausgegeben, das zu einem Abwurf des Stirndeckels 12A führt. Die Anzahl der Häufigkeit des Auftretens eines derartigen Vakuumfehlers Δxvn wird gezählt. Ergibt sich hier eine Fehlerhäufigkeit H innerhalb einer vordefinierten Zeitspanne, die größer als ein vordefinierter Betrag ist, beispielsweise 3 wird eine Störung detektiert, die zur Auslösung eines Warnsignals YA sowie zur Vorgabe eines Ereignissignals YE, beispielsweise in Form einer Aufforderung, die Störung zu beseitigen, sowie eines Zustandsignals YZ, welches auf die Fehlerquelle Vakuumfehler hinweist, ausgegeben. Ist eine bestimmte Häufigkeit H nicht überschritten, wird ein Stellsignal YS erzeugt, neue Stirndeckel 12A zu holen. Der Prozess wird auf Abweichungen vom Idealzustand überwacht und der Stirndeckel 12A angelegt.

So wie für die Größe des anzulegenden Vakuums beim Handling der Außenstirndeckel 12A kann für jedes Element oder jede Komponente innerhalb der Packanlage und deren einzelne Betriebsparameter eine derartige Überwachung erfolgen und für jeden dieser Betriebsparameter, die die Funktionsweise der Vorrichtung 1 zur Verpackung von Materialbahnrollen 2.1 bis 2.n beschreiben, ein Zulässigkeitsbereich für Abweichungen definiert werden. Dabei kann der Zulässigkeitsbereich auch nahezu null betragen, das heißt, die Toleranz für die anzulegenden Betriebsparameter ist nahezu null.

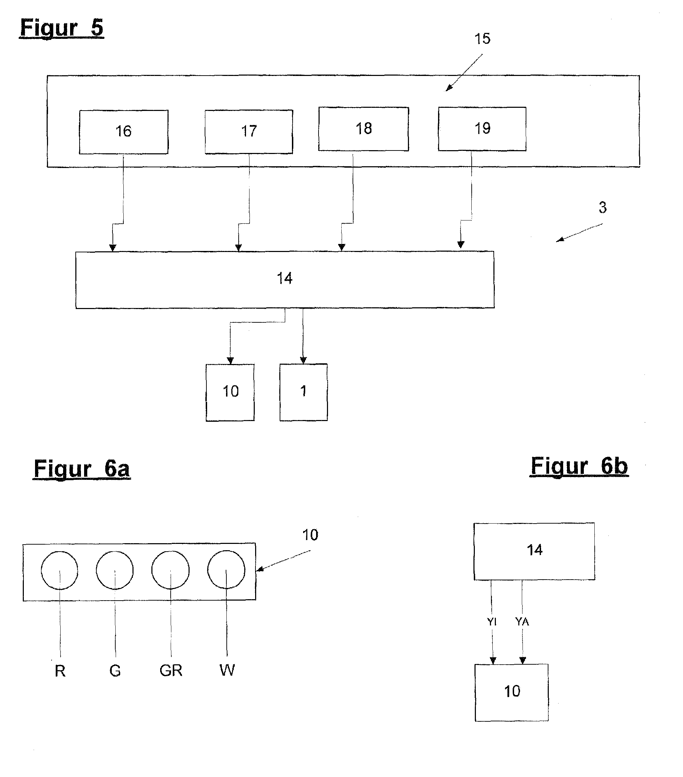

Die Figur 5 verdeutlicht in schematisiert vereinfachter Darstellung beispielhaft den Aufbau eines intelligenten Fehleranalyse- und Meldesystems 3. Dieses umfasst ein der Vorrichtung 1 zugeordnetes Überwachungssystems 15, eine Auswert- und/oder Analysevorrichtung 14 sowie gegebenenfalls eine Meldevorrichtung, insbesondere Meldesystem 10. Das Überwachungssystem 15 umfasst Einrichtungen 16 zur Erfassung von Prozessgrößen/Prozessparametern der einzelnen Komponenten/Aggregate/Maschinen/Anlage, Einrichtungen 17 zur Erfassung von Zustandsgrößen/Zustandsparametern der einzelnen Komponenten/Aggregate/Maschinen/Anlage, Einrichtungen 18 zur Erfassung von Prozessgrößen/Prozessparametern der Materialbahnrollen/Verbrauchsmaterialien, Einrichtungen 19 zur Erfassung von Zustandsgrößen/Zustandsparametern der Materialbahnrollen/Verbrauchsmaterialien. Dabei können jeweils mehrere derartige Einrichtungen zur Erfassung unterschiedlichster Parameter eingesetzt werden. Entsprechend des Auswertergebnisses wird das Meldesystem 10 angesteuert und/oder Stelleinrichtungen der Vorrichtung 1.

Die Auswertung und Analyse innerhalb der Auswert- und/oder Analysevorrichtung 14 kann dabei ebenfalls auf unterschiedliche Art und Weise realisiert werden. Im einfachsten Fall finden Algorithmen und vorprogrammierte Programme Verwendung. Ferner sind mathematische Auswertmethoden denkbar. Die Auswert- und/oder Analysevorrichtung 14 ist im einfachsten Fall als Steuer- und/oder Regeleinrichtung ausgebildet, die vorzugsweise von der Steuer- und/oder Regeleinrichtung zur Steuerung/Regelung der Packanlage gebildet wird oder aber in dieser integriert ist.

Die Stelleinrichtungen können ebenfalls verschiedenartig ausgebildet sein. Bei diesen kann es sich um Stelleinrichtungen der einzelnen Komponenten der Packanlage handeln, ferner um weitere Stelleinrichtungen, die Ausgabesysteme für die einzelnen Signale, Wartungssignal, Warnsignal, Zustandssignal oder Ereignissignal betätigen.

Insbesondere können nicht nur ein, sondern mehrere Signale ausgegeben werden, wobei immer Zustands- sowie Ereignissignale, Zustands- und Wartungssignale, Warn- und Ereignissignale parallel erzeugbar sind. Andere Kombinationen sind ebenfalls denkbar. Die Signalerzeugung kann optisch, akustisch oder in anderer Art und Weise erfolgen. Insbesondere für die Information des Bedienpersonals ergeben sich eine Vielzahl von Möglichkeiten. Hierzu können mobile oder stationäre Systeme genutzt werden, insbesondere auf Funk oder Infrarottechnik basierende Systeme, beispielsweise Telekommunikationsanlagen.

Die Figur 6a verdeutlicht ein Beispiel für ein optisches Meldesystem 10 mit farbigen Leuchten. Dieses weist eine Art Farbsignalanlage auf, die vom Bediener gut sichtbar ist. Dabei verdeutlicht das Signal "Rot" mit R bezeichnet eine Information, dass die Anlage auf Störung steht und ein Eingriff durch den Bediener dringend erforderlich ist. Das Signal "Gelb" G verdeutlicht, dass die Anlage noch im Betrieb ist, aber in Kürze einen Eingriff durch den Bediener erfordert, beispielsweise um Stirndeckel nachzufüllen. Dies entspricht einem Wartungssignal. Das Signal "Grün" GR verdeutlicht, dass die Anlage in Betrieb ist und alles ordnungsgemäß verläuft, während das Signal "Weiß" W i n Zustandssignal wiedergibt, das heißt, die Vorrichtung 1 befindet sich im Stand-by aufgrund fehlender Produktion.

Gemäß Figur 6b ist ein alternatives Meldesystem 10 wiedergegeben. Bei diesem erfolgen die Informationen über den/die Zustände in der Anlage, die vom Normalbetrieb abweichen akustisch und optisch. Eine Meldung erfolgt beispielsweise in Form einer SMS, die an das Bedienpersonal geleitet wird. Dabei sind unterschiedliche Meldungen denkbar, beispielsweise "Anlage steht auf Störung wegen fehlender Innendeckel" oder eine "Wartungsinformation", dass die Anlage in einer vordefinierten Zeitdauer neues Packpapier benötigt.

### Bezugszeichenliste

- 1: Wickelvorrichtung
- 2.1 bis 2.n: Materialbahnrolle
- 3: intelligentes Fehleranalyse- und Auswertsystem
- 4: Umhüllungsstation
- 5, 5.1, 5.2: Einrichtung zur Positionierung und/oder Fixierung von Stirndeckeln
- 6: Transporteinrichtung
- 7: Packanlagenbereich
- 8: Bereitstellungsbereich
- 9: Bereitstellungsbereich
- 10: Meldesystem
- 11.1 - 11.n: Verpackungsmaterialbahnrollen
- 12: Stirndeckel
- 12A: Außenstirndeckel
- 12I: Innenstirndeckel
- 12.1 - 12.n: Stirndeckelstapel
- 13: Produktionsanlage
- 14: Überwachungssystem, Überwachungseinrichtung
- 15: Analyse- und/oder Auswertsystem
- 16: Einrichtung zur Erfassung von Prozessgrößen/Prozessparametern der einzelnen Komponenten/Aggregate/Maschinen/Anlage
- 17: Einrichtungen zur Erfassung von Zustandsgrößen/Zustandsparametern der einzelnen Komponenten/Aggregate/Maschinen/Anlage
- 18: Einrichtungen zur Erfassung von Prozessgrößen/Prozessparametern der Materialbahnrollen/Verbrauchsmaterialien
- 19: Einrichtungen zur Erfassung von
Zustandsgrößen/Zustandsparametern der
Materialbahnrollen/Verbrauchsmaterialien
- B: Überwachungsbereich
- K1 - Kn: Klasse
- Z_{I}: Idealzustand
- Δx1 - Δxn: Abweichungen der Istwerte von einer einen Idealzustand Z_{I} beschreibende Größe
- Δxvn: Abweichung Vakuum
- X_{1I} - X_{nI}.: den Idealzustand beschreibende Größe
- Δx1_{zulässig}, Δxn_{zulässig}: Zulässigkeitsbereich
- H: Häufigkeit
- Hₐₗₜ: Häufigkeit
- XV: Prozess-/Zustandsgröße Vakuum
- YA: Warnsignal
- YE: Ereignissignal
- YI: Informationssignal
- YS: Stellsignal
- YW: Wartungssignal
- YZ: Zustandssignal
- R: Rot
- G: Gelb
- GR: Grün
- W: Weiß

## Patentansprüche

1. Verfahren zur Optimierung der Betriebsweise einer Vorrichtung (1) zum Verpacken von Materialbahnrollen (2.1-2.n), bei welchem in einem Überwachungsbereich (B) der Vorrichtung (1) deren Funktionsweise überwacht wird und eine Abweichung (Δx1 - Δxn, Δxvn) von einem Idealzustand (Z_{I}) in der Funktionsweise detektiert wird,
**dadurch gekennzeichnet,**
**dass** die Abweichung (Δx1 - Δxn, Δxvn) klassiert (K1-Kn) und hinsichtlich ihrer Auswirkung auf die Funktionsweise der Vorrichtung (1) zum Verpacken von Materialbahnrollen (2.1-2.n) analysiert wird und in Abhängigkeit der Auswirkung auf die Funktionsweise der Vorrichtung (1) zum Verpacken von Materialbahnrollen (2.1-2.n) zumindest ein Signal (YA, YE, YI, YS, YW, YZ) erzeugt wird.

2. Verfahren nach Anspruch 1,
**dadurch gekennzeichnet,**
**dass** für jede Klasse (K1-Kn) der Abweichungen (Δx1 - Δxn, Δxvn) ein Zulässigkeitsbereich (Δx1_{zulässig}, Δxn_{zulässig}) definiert wird, wobei der Zulässigkeitsbereich (Δx1_{zulässig}, Δxn_{zulässig}) null oder ungleich null betragen kann.

3. Verfahren nach einem der Ansprüche 1 oder 2,
**dadurch gekennzeichnet,**
**dass** das Signal (YA, YE, YI, YS, YW, YZ) in Form eines der nachfolgend genannten Signale (YA, YE, YI, YS, YW, YZ) erzeugt wird:
- Warnsignal (YA) zum Hinweis auf das Vorliegen einer Abweichung (Δx1 - Δxn, Δxvn)
- Ereignissignal (YE) zur Einleitung eines Prozesses
- Wartungssignal (YW) zum Hinweis auf die erforderliche Einleitung eines Prozesses zu einem späteren Zeitpunkt
- Zustandssignal (YZ) zur Beschreibung des Zustandes.
- Informationssignal (YI)
- Stellsignal (YS) zur Ansteuerung einer Stelleinrichtung einer Komponente/Aggregates/der Vorrichtung (1).

4. Verfahren nach einem der Ansprüche 1 bis 3,
**dadurch gekennzeichnet,**
**dass** bei Detektion einer Abweichung (Δx1 - Δxn, Δxvn) oder einer Abweichung (Δx1 - Δxn, Δxvn) außerhalb des Zulässigkeitsbereiches (Δx1_{zulässig}, Δxn_{zulässig}) ein Warnsignal (YA) erzeugt wird.

5. Verfahren nach einem der Ansprüche 1 bis 4,
**dadurch gekennzeichnet,**
**dass** bei Detektion einer Abweichung (Δx1 - Δxn, Δxvn) der einer Abweichung (Δx1 - Δxn, Δxvn) außerhalb des Zulässigkeitsbereiches (Δx1_{zulässig}, Δxn_{zulässig}) ein Ereignissignal (YE) in Form eines Stellsignals (YS) zur Deaktivierung/zum Anhalten der Vorrichtung (1) zum Verpacken von Materialbahnrollen (2.1-2.n) erzeugt wird.

6. Verfahren nach einem der Ansprüche 2 bis 5,
**dadurch gekennzeichnet,**
**dass** bei Vorliegen einer Abweichung (Δx1 - Δxn, Δxvn) innerhalb des Zulässigkeitsbereiches (Δx1_{zulässig}, Δxn_{zulässig}) zumindest ein Zustandssignal (YZ) zur Vorgabe einer Information über den Zustand der Vorrichtung (1) zur Verpackung von Materialbahnrollen (2.1-2.n) und/oder ein Wartungssignal (YW) und/oder ein Ereignissignal (YE) und/oder ein Stellsignal (YS) erzeugt wird.

7. Verfahren nach einem der Ansprüche 1 bis 6,
**dadurch gekennzeichnet,**
**dass** die Häufigkeit (H) des Auftretens von Abweichungen (Δx1 - Δxn, Δxvn) einer Abweichungsklasse (K1-Kn) überwacht wird, insbesondere über einen vordefinierten Referenzzeitraum.

8. Verfahren nach einem der Ansprüche 1 bis 7,
**dadurch gekennzeichnet,**
**dass** zur Überwachung der Funktionsweise der Vorrichtung (1) zumindest eine der nachfolgenden Größen überwacht wird:
- Prozessgrößen/Prozessparameter der einzelnen Komponenten/Aggregate / Maschinen / Vorrichtung (1);
- Zustandsgrößen/Zustandsparameter der einzelnen Komponenten/Aggregate / Maschinen / Vorrichtung (1);
- Prozessgrößen/Prozessparameter der einzelnen Materialbahnrollen/Verbrauchsmaterialien;
- Zustandsgrößen/Zustandsparameter der einzelnen Materialbahnrollen/Verbrauchsmaterial ien.

9. Verfahren nach einem der Ansprüche 1 bis 8,
**dadurch gekennzeichnet,**
**dass** die Abweichung (Δx1 - Δxn, Δxvn) von einem Ereignis gebildet wird.

10. Verfahren nach einem der Ansprüche 1 bis 9,
**dadurch gekennzeichnet,**
**dass** die Abweichung (Δx1 - Δxn, Δxvn) durch einen Zustand charakterisiert wird.

11. Verfahren nach einem der Ansprüche 1 bis 10,
**dadurch gekennzeichnet,**
**dass** das Signal (YA, YE, YI, YS, YW, YZ) ein optisches Meldesystem (10) ansteuert und/oder ein Farbsignal und/oder digitales Anzeigesignal erzeugt und/oder ein akustisches Meldesystem (10) ansteuert und/oder ein Funksignal erzeugt, beispielsweise ein Telekommunikationssignal.

12. Vorrichtung (1) zum Verpacken von Materialbahnrollen (2.1-2.n), insbesondere eine Packanlage zur Umhüllung von Materialbahnrollen (2.1-2.n) mit Verpackungsmaterial, umfassend zumindest eine Umhüllungsstation und eine Einrichtung (5.1, 5.2) zur Anlage/Fixierung von Stirndeckeln (12, 12A, 12I),
**dadurch gekennzeichnet,**
**dass** ein intelligentes Fehleranalyse- und Meldesystem (3) vorgesehen ist, umfassend
- ein der Vorrichtung (1) zugeordnetes Überwachungssystem (15) zur Erfassung von Abweichungen (Δx1 - Δxn, Δxvn) von einem Idealzustand (Z_{I}) in der Funktionsweise der Vorrichtung (1)
- eine Auswert- und/oder Analysevorrichtung (14) zur Auswertung der mit dem Überwachungssystem (15) detektierten Abweichungen (Δx1 - Δxn, Δxvn)
- zumindest eine Einrichtung zur Erzeugung zumindest einer Stellgröße (YS) zur Ausgabe wenigstens eines Signals (YA, YE, YI, YS, YW, YZ).

13. Vorrichtung (1) nach Anspruch 12,
**dadurch gekennzeichnet,**
**dass** das Überwachungssystem (15) zumindest eine der nachfolgenden Einrichtungen umfasst:
- Einrichtungen (16) zur Erfassung von Prozessgrößen/Prozessparametern der einzelnen Komponenten/Aggregate/Maschinen/Vorrichtung (1);
- Einrichtungen (17) zur Erfassung von Zustandsgrößen /Zustandsparametern der einzelnen Komponenten/Aggregate /Maschinen /Vorrichtung (1);
- Einrichtungen (18) zur Erfassung von Prozessgrößen/Prozessparametern der einzelnen Materialbahnrollen/Verbrauchsmaterialien,
- Einrichtungen (19) zur Erfassung von Zustandsgrößen/Zustandsparametern der Materialbahnrollen/Verbrauchsmaterialien.

14. Vorrichtung (1) nach Anspruch 12 oder 13,
**dadurch gekennzeichnet,**
**dass** das intelligente Fehleranalyse- und Meldesystem (3) ein Meldesystem (10) umfasst.

15. Vorrichtung (1) nach Anspruch 14,
**dadurch gekennzeichnet,**
**dass** das Meldesystem (10) als
- optisches Meldesystem
- akustisches Meldesystem
- eine Kombination aus optischen und akustischen Meldesystem ausgebildet ist.

16. Vorrichtung (1) nach einem der Ansprüche 12 bis 15,
**dadurch gekennzeichnet,**
**dass** die Datenübertragung zwischen dem Überwachungssystem (15) und/oder Auswert- und/oder Analysevorrichtung (14) und/oder der Auswert- und/oder Analysevorrichtung (14) und dem Meldesystem (10) und/oder den einzelnen Einrichtungen des Überwachungssystems (15) drahtlos, insbesondere per Funk oder Infrarot erfolgt.
